Europäisches Patentamt

European Patent Office

Office européen des brevets

(19)

(11) Veröffentlichungsnummer: **0 286 909 B1**

(12) # EUROPÄISCHE PATENTSCHRIFT

(45) Veröffentlichungstag der Patentschrift: **14.08.91**

(51) Int. Cl.⁵: **H02M 7/5375, H02M 3/335**

(21) Anmeldenummer: **88105120.5**

(22) Anmeldetag: **29.03.88**

(54) **Verfahren zur Inbetriebnahme einer von einer Regel- und Steuerelektronik getakteten Stromversorgungseinheit und Vorrichtung zur Durchführung des Verfahrens.**

(30) Priorität: **01.04.87 AT 801/87**

(43) Veröffentlichungstag der Anmeldung:
**19.10.88 Patentblatt 88/42**

(45) Bekanntmachung des Hinweises auf die
Patenterteilung:
**14.08.91 Patentblatt 91/33**

(84) Benannte Vertragsstaaten:
**AT BE CH DE FR GB IT LI LU NL SE**

(56) Entgegenhaltungen:

**PATENT ABSTRACTS OF JAPAN, Band 16, Nr. 122 (E-500)[2569], 16. April 1987; & JP-A-61 269 672 (NEC CORP.) 29-11-1986**

**TELCOM REPORT, Band 9, Nr. 5, 1986, Seiten 306-310; B. BRAKUS: "Stromversorgungsmodule für Leiterplatten-montage"**

(73) Patentinhaber: **Siemens Aktiengesellschaft Österreich**
**Siemensstrasse 88 - 92**
**A-1210 Wien(AT)AT**

Patentinhaber: **Siemens Aktiengesellschaft**
**Wittelsbacherplatz 2**
**W-8000 München 2(DE)BE CH DE FR GB IT LI LU NL SE**

(72) Erfinder: **Drescher, Hans**
**Skraupstrasse 24**
**A-1210 Wien(AT)**
Erfinder: **Müllner, Thomas**
**Herretweg 4/5/9**
**A-1110 Wien(AT)**

EP 0 286 909 B1

## Beschreibung

Die Erfindung betrifft ein Verfahren zur Inbetriebnahme einer von einer Regel- und Steuerelektronik getakteten Stromversorgungseinheit mit einer von der Stromversorgungseinheit gespeisten Hilfsspannungsversorgung der Regel- und Steuerelektronik durch eine über einen Vorwiderstand aus einer Speisespannung abgeleiteten Startspannung.

Ein derartiges Verfahren wird bei den im Telcom Report 9 (1986), Heft 5, Seite 306 - 310, beschriebenen Stromversorgungsmodulen angewandt. Der Übersichtsschaltplan zeigt das Funktionsprinzip. Es wird ein Starterkondensator über einen hochohmigen Vorwiderstand aufgeladen und ein Starter-Flip-Flop schaltet den Strom auf einen Sperrumrichter. Dabei wird ein Pulsbreitenmodulator kurzzeitig nur aus dem Starterkondensator gespeist. In dieser Zeitspanne baut sich eine Hilfsspannung auf, die die Versorgung der Hilfskreise übernimmt. Dadurch wird die Verlustleistung am Vorwiderstand in Grenzen gehalten.

Aus der JP-A 61-269672 ist bekannt, ohne Vorwiderstand einen Startspannungskreis mit Kondensator aufzuladen und den Ladevorgang nach einer bestimmten Zeitspanne mit einem Relaiskontakt zu unterbrechen. Mit dem Strom aus dem Kondensator wird die Stromversorgungseinheit gestartet, die weitere Versorgung erfolgt über einen zweiten Stromkreis als Hilfsspannungsversorgung.

Der Erfindung liegt die Aufgabe zugrunde, die Verlustleistung weiter zu verringern und bei Versagen der Hilfsspannungsversorgung ein Überlasten des Vorwiderstandes zu verhindern.

Dies wird gemäß Patentanspruch 1 dadurch erreicht, daß ein Startspannungsschalter parallel zum Vorwiderstand von der Speisespannung versorgt wird und daß durch den Startspannungsschalter der Startspannungskreis mit dem Vorwiderstand nach einer Zeitspanne unterbrochen wird, in der bei störungsfreier Betriebnahme der Stromversorgungseinheit von der Hilfsspannungsversorgung die Nennspannung der Regel- und Steuerelektronik aufgebaut wird.

Der Vorwiderstand kann kleiner gewählt werden, da sichergestellt ist, daß er nach der Anlaufphase weggeschaltet wird und Widerstände im Kurzzeitbetrieb mit einem Mehrfachen ihrer Dauerleistung betrieben werden dürfen.

Die Stromversorgung des Startspannungsschalters erfolgt unmittelbar über die Speisespannung. Dadurch ist das Abschalten des Vorwiderstandes auch bei einem Nichtanlauf der Stromversorgungseinheit gewährleistet.

Eine zuverlässige Ansteuerung des Startspannungsschalters wird dadurch erreicht, daß ein Startkondensator über einen Startwiderstand mit der Speisespannung verbunden und auf eine Schaltspannung geladen wird, daß die Kapazität des Startkondensators so groß gewählt wird, daß während der Ladezeit des Startkondensators von der Hilfsspannungsversorgung die Nennspannung aufgebaut wird und daß nach dem Laden des Startkondensators vom Startspannungschalter die Verbindung vom Vorwiderstand zur Regel- und Steuerelektronik unterbrochen wird.

Eine weitere Verringerung des zu Inbetriebnahme der Regel- und Steuerelektronik notwendigen Stromes wird dadurch erreicht, daß ein Hilfsspeicherkondensator vom Startspannungsschalter über den Vorwiderstand mit der Speisespannung verbunden und auf die Startspannung geladen wird, die höher als die für den Betrieb der Regel- und Steuerelektronik nötige Nennspannung ist, daß nach Erreichen dieser Startspannung der Hilfsspeicherkondensator von einem Hilfsspannungsschalter mit der Regel- und Steuerelektronik verbunden und die Kapazität des Hilfsspeicherkondensators so groß gewählt wird, daß von der Hilfsspannungsversorgung die Nennspannung bei störungsfreiem Betrieb schneller aufgebaut wird, als die Spannung des Hilfsspeicherkondensators unter die zum Betrieb der Regel- und Steuerelektronik benötigte Minimalspannung absinkt.

Die Durchführung des Verfahrens wird von einer Vorrichtung ermöglicht, bei der die Speisespannung an der Stromversorgungseinheit, dem Startspannungsschalter und dem Vorwiderstand angelegt ist, der über den Startspannungsschalter mit der Regel- und Steuerelektronik verbunden ist und bei der die Hilfsspannungsversorgung von der Stromversorgungseinheit über eine Sperrdiode in Durchgangsrichtung parallel zum Startspannungskreis mit der Regel- und Steuerelektronik verbunden ist. Zum genauen Einhalten des Schaltzeitpunktes sind der Startkondensator und ein dazu parallel geschalteter Startspannungskomparator in Serie mit dem Startwiderstand verbunden und diese Bauteile parallel zum Startspannungschalter geschaltet. Ein übersichtlicher Schaltungsaufbau wird dadurch erreicht, daß zueinander paprallel der Hilfsspeicherkondensator, ein Hilfsspannungskomparator und der Hilfsspannungsschalter parallel zur Hilfsspannungsversorgung geschaltet sind und daß ein Ausgang des Hilfsspannungskomparators zusätzlich mit einem Eingang des Hilfsspannungsschalters verbunden ist. Ist die Stromversorgungseinheit gestört, so wird der Anlaufvorgang nach dem Entladen des Hilfsspeicherkondensators automatisch abgebrochen, da dann die Spannung des Hilfsspeicherkondensators unter die zum Betrieb der Regel- und Steuerelektronik benötigte Minimalspannung absinkt ohne daß die Hilfsspanungsversorgung die Nennspannung aufbaut.

Die Erfindung wird anhand von Ausführungsbeispielen und Zeichnungen näher erläutert. Es zeigen:

Fig. 1 das schematische Blockschaltbild des ersten Ausführungsbeispieles,

Fig. 2 das schematische Blockschalbildes eines zweiten Ausführungsbeispieles und

Fig. 3 den genaueren schaltungsmäßigen Aufbau des zweiten Ausführungsbeispieles.

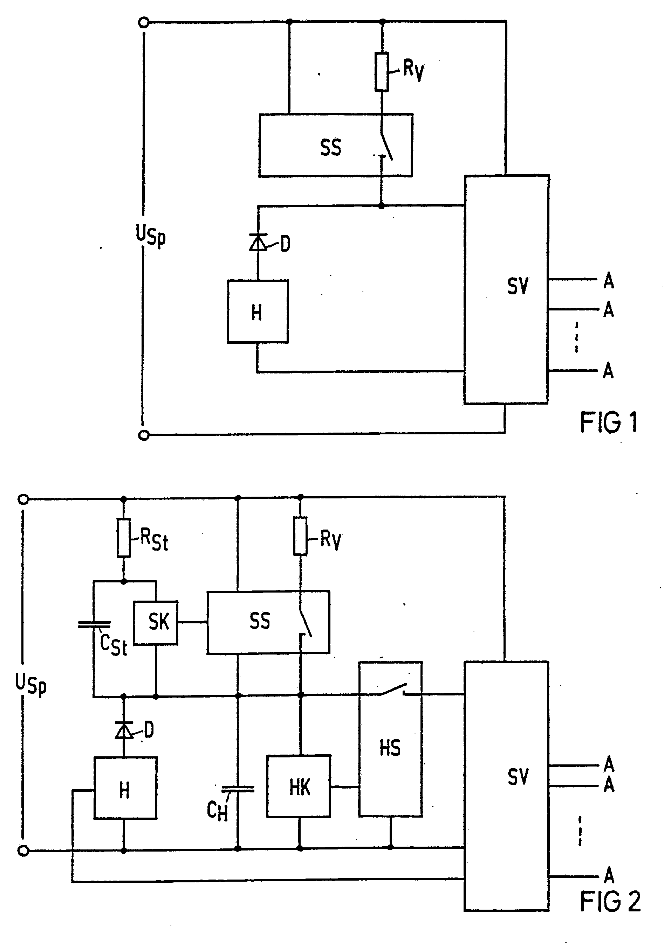

Das in Fig. 1 dargestellte erste Ausführungsbeispiel, ein getakteter PrimärSchaltregler, enthält eine Stromversorgungseinheit SV mit Regel- und Steuerelektronik für mehrere Ausgangsleitungen A. Es wird eine Speisespannung $U_{Sp}$ von 200 - 250 V angelegt. In der Anlaufphase, bevor die Stromversorgung SV mit der Regel- und Steuerelektronik verwertbaren Strom liefert, wird eine Startspannung aus der Speisespannung $U_{Sp}$ abgeleitet. Dazu wird ein Vorwiderstand $R_V$ über einen Startspannungsschalter SS mit der Regel- und Steuerelektronik verbunden. Nach der Anlaufphase wird von der Stromversorgung SV über eine Hilfsspannungsversorgung H die Regel- und Steuerelektronik mit ihrer Nennspannung versorgt. Daher wird nun vom Startspannungsschalter SS der Vorwiderstand $R_V$ abgeschaltet. Damit entfällt die vom Vorwiderstand benötigte Verlustleistung. Der Startspannungsschalter SS wird gleichfalls von der Speisesspannung $U_{Sp}$ mit Strom versorgt und arbeitet daher unabhängig vom Anlaufen der Stromversorgung SV. Der Vorwiderstand $R_V$ wird vor Überlastung geschützt, in dem der Startspannungsschalter SS die Verbindung nach einer Zeitspanne unterbricht, in der bei störungsfreier Inbetriebnahme der Stromversorgungseinheit SV von der Hilfsspannungsversorgung H die Nennspannung der Regel- und Steuerelektronik aufgebaut wird. Eine Sperrdiode D verhindert ein Anliegen der Startspannung an der Hilfsspannungsversorgung H. Der Strom wird über den Vorwiderstand $R_V$ zuverlässig zur Regel- und Steuerelektronik geleitet.

Fig. 2 zeigt gleichfalls einen getakteten Primär-Schaltregler als zweites Ausführungsbeispiel. Über einen Startwiderstand $R_{St}$ wird bei geschlossenem Startspannungsschalter SS ein Startkondensator $C_{St}$ von der Speisespannung $U_{Sp}$ geladen. Die Kapazität des Startkondensators $C_{St}$ wird so groß gewählt, daß während der Ladezeit bis zum Erreichen einer Schaltspannung von der Hilfsspannungsversorgung H die Nennspannung der Regel- und Steuerelektronik aufgebaut wird. Durch einen Startspannungskomparator SK, der mit einem Eingang des Startspannungsschalters SS verbunden ist, wird beim Erreichen der Schaltspannung das Öffnen des Startspannungsschalters SS ausgelöst.

Bei geschlossenem Startspannungsschalter SS wird über den Vorwiderstand $R_V$ ein Hilfsspeicherkondensator $C_H$ von der Speisespannung $U_{Sp}$ aufgeladen. Ein Hilfsspannungsschalter HS unterbricht die Verbindung zwischen dem Hilfsspeicherkondensator $C_H$ und der Regel- und Steuerelektronik solange, bis der Hilfsspeicherkondensator $C_H$ auf eine Startspannung geladen ist, die höher als die für den Betrieb der Regel- und Steuerelektronik nötige Nennspannung ist. Nach Erreichen der Startspannung wird von einem mit dem Hilfsspannungsschalter HS verbundenen Hilfsspannungskomparator HK das Schließen des Hilfsspannungsschalters HS ausgelöst und die Regel- und Steuerelektronik mit dem Hilfsspeicherkondensator $C_H$ verbunden. Dadurch wird der für den Anlauf benötigte Strom nicht mehr direkt über den Vorwiderstand $R_V$ von der Speisespannung $U_{Sp}$ geliefert. Der durch den Vorwiderstand $R_V$ fließende Strom kann somit kleiner gehalten werden, da nur mehr der Hilfsspeicherkondensator $C_H$ aufzuladen ist.

Spätestens nach dem Absinken der Spannung des Hilfsspeicherkondensators $C_H$ unter eine zum Betrieb der Regel- und Steuerelektronik benötigte Minimalspannung muß von der Stromversorgungseinheit SV mit einer Hilfsspannungsversorgung H die Nennspannung aufgebaut werden. Der Hilfsspannungsschalter HS bleibt geschlossen und der Startspannungsschalter SS öffnet. Die Sperrdiode D ist derart zwischen Hilfsspannungsversorgung H und Hilfsspeicherkondensator $C_H$ geschaltet, daß die Sperrichtung des Fließen eines Stromes vom Hilfsspeicherkondensator $C_H$ zur Hilfsspannungsversorgung H verhindert. Die Kapazität des Hilfsspeicherkondensators $C_H$ ist so groß zu wählen, daß seine Spannung nicht rascher unter die Minimalspannung absinkt, als von der Hilfsspannungsversorgung H die Nennspannung bei störungsfreiem Anlauf der Stromversorgungseinheit SV aufgebaut wird.

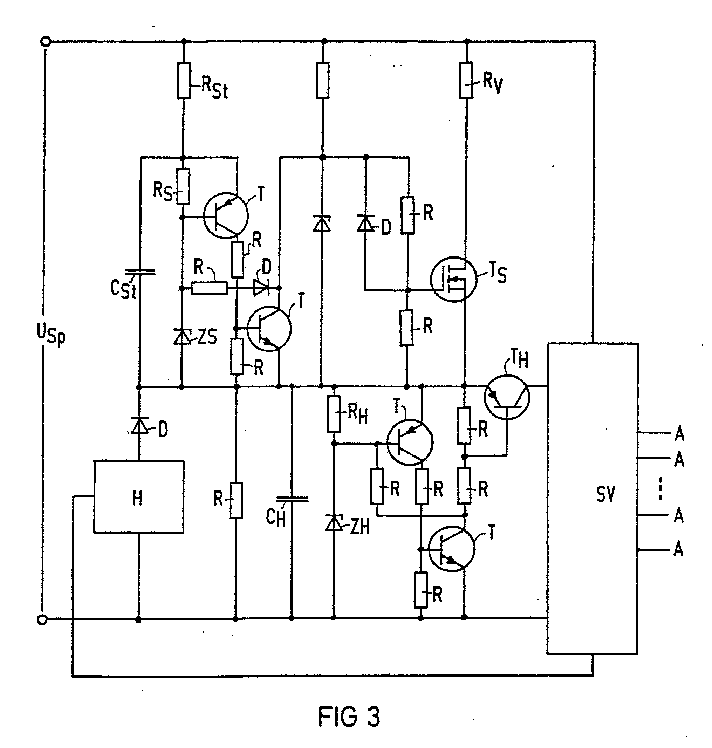

Fig. 3 zeigt den genauen Aufbau der Komparatoren und Schalter. Eine die Schaltschwelle bestimmende Startkompartor-Zenerdiode ZS ist in Serie mit einem Startkomparatorwiderstand $R_S$ parallel zum Startkondensator $C_{St}$ geschaltet. Der Startspannungsschalter enthält zwei Schalttransistoren T, die einen Thyristor bilden, der beim Anliegen der Basis-Emitterspannung am Eingang des Startspannungsschalters zündet. Der eigentliche Leistungsschalter für den Vorwiderstand $R_V$ wird von einem Startschalttransistor $T_S$ gebildet.

Der Hilfsspannungskomparator entspricht dem Startspannungskomparator und besteht aus einer Hilfskomparator-Zenerdiode ZH und einem Hilfskomparatorwiderstand $R_H$. Der Hilfsspannungsschalter enthält ebenfalls zwei in Thyristorschaltung betriebene Schalttransistoren T, die Schaltfunktion führt ein Hilfsschalttransistor $T_H$ aus. Um den Startkondensator $C_{St}$ und den Hilfsspeicherkondensator $C_H$ in gleicher Zeit mit konstantem Strom auf eine bestimmte Spannung aufzuladen, müssen die Zeitkonstanten der Serienschaltung aus Startwiderstand $R_{St}$ und Startkondensator $C_{St}$ bzw. Vorwiderstand $R_V$ und Hilfsspeicherkondensator $C_H$ gleich sein. Da durch die Spannung am Startkondensator $C_{St}$ die Spannung am Startwiderstand $R_{St}$ vermindert ist, schaltet der Hilfsspannungsschalter immer vor dem Startspannungsschalter.

Durch die Wahl der Anpassungswiderstände R ist sicherzustellen, daß der Startschalttransistor $T_S$ bzw. der Hilfsschalttransistor $T_H$ ihren jeweiligen Schaltzustand sicher halten. Die Startkomparator-Zenerdiode ZS und die Hilfskomparator-Zenerdiode ZH haben den gleichen Wert, die um die Spannung des Hilfsspeicherkondensators $C_H$ verminderte Speisespannung $U_{Sp}$ ist sehr groß gegenüber der Spannung am Startkondensator $C_{St}$. Daher gilt näherungsweise, daß sich die Ströme im Start- und Vorwiderstand $R_{St}$, $R_V$ proportional zu den Widerstandswerten verhalten. Dadurch wird die Funktionsfähigkeit der Schaltung sichergestellt.

## Patentansprüche

1. Verfahren zur Inbetriebnahme einer von einer Regel- und Steuerelektronik getakteten Stromversorgungseinheit (SV) mit einer von der Stromversorgungseinheit (SV) gespeisten Hilfsspannungsversorgung (H) der Regel- und Steuerelektronik durch eine über einen Vorwiderstand ($R_V$) aus einer Speisespannung ($U_{Sp}$) abgeleiteten Startspannung, **dadurch gekennzeichnet**, daß ein Startspannungsschalter (SS) parallel zum Vorwiderstand ($R_V$) von der Speisespannung ($U_{Sp}$) versorgt wird und daß durch den Startspannungsschalter (SS) der Startspannungskreis mit dem Vorwiderstand ($R_V$) nach einer Zeitspanne unterbrochen wird, in der bei störungsfreier Inbetriebnahme der Stromversorgungseinheit (SV) von der Hilfsspannungsversorgung (H) die Nennspannung der Regel- und Steuerelektronik aufgebaut wird.

2. Verfahren nach Anspruch 1, **dadurch gekennzeichnet**, daß ein Startkondensator ($C_{St}$) über einen Startwiderstand ($R_{St}$) mit der Speisespannung ($U_{Sp}$) verbunden und auf eine Schaltspannung geladen wird, daß die Kapazität des Startkondensators ($C_{St}$) so groß gewählt wird, daß während der Ladezeit des Startkondensators ($C_{St}$) von der Hilfsspannungsversorgung (H) die Nennspannung aufgebaut wird und daß nach dem Laden des Startkondensators ($C_{St}$) vom Startspannungschalter (SS) die Verbindung vom Vorwiderstand ($R_V$) zur Regel- und Steuerelektronik unterbrochen wird.

3. Verfahren nach Anspruch 1 oder 2, **dadurch gekennzeichnet**, daß ein Hilfsspeicherkondensator ($C_H$) vom Startspannungsschalter (SS) über den Vorwiderstand ($R_V$) mit der Speisespannung ($U_{Sp}$) verbunden und auf die Startspannung geladen wird, die höher als die für den Betrieb der Regel- und Steuerelektronik nötige Nennspannung ist, daß nach Erreichen dieser Startspannung der Hilfsspeicherkondensator ($C_H$) von einem Hilfsspannungsschalter (HS) mit der Regel- und Steuerelektronik verbunden und die Kapazität des Hilfsspeicherkondensators ($C_H$) so groß gewählt wird, daß von der Hilfsspannungsversorgung (H) die Nennspannung bei störungsfreiem Betrieb schneller aufgebaut wird, als die Spannung des Hilfsspeicherkondensators ($C_H$) unter die zum Betrieb der Regel- und Steuerelektronik benötigte Minimalspannung absinkt.

4. Vorrichtung zur Durchführung des Verfahrens nach Anspruch 1, **dadurch gekennzeichnet**, daß die Speisespannung ($U_{Sp}$) an der Regel- und Steuerelektronik, dem Startspannungsschalter (SS) und dem Vorwiderstand ($R_V$) angelegt ist, der über den Startspannungsschalter (SS) mit der Regel- und Steuerelektronik verbunden ist und daß die Hilfsspannungsversorgung (H) von der Stromversorgungseinheit (SV) über eine Sperrdiode (D) in Durchgangsrichtung parallel zum Startspannungskreis mit der Regel-und Steuerelektronik verbunden ist.

5. Vorrichtung nach Anspruch 4 zur Durchführung des Verfahrens nach Anspruch 2, **dadurch gekennzeichnet**, daß der Startkondensator ($C_{St}$), und ein dazu parallel geschalteter Startspannungskomparator (SK) in Serie mit dem Startwiderstand ($R_{St}$) verbunden sind und daß diese Bauteile parallel zum Startspannungsschalter (SS) geschaltet sind.

6. Vorrichtung nach Anspruch 4 oder 5 zur Durchführung des Verfahrens nach Anspruch 3, **dadurch gekennzeichnet**, daß zueinander parallel der Hilfsspeicherkondensator ($C_H$), ein Hilfsspannungskomparator (HK) und der Hilfsspannungsschalter (HS) parallel zur Hilfsspannungsversorgung (H) geschaltet sind und daß ein Ausgang des Hilfsspannungskomparators (HK) zusätzlich mit einem Eingang des Hilfsspannungsschalters (HS) verbunden ist.

## Claims

1. Method for starting up a power supply unit (SV) operated in switching mode by control electronics, comprising an auxiliary-voltage supply (H) of the control electronics, fed by the power supply unit (SV), by means of a start voltage derived from a feed voltage ($U_{Sp}$) via a series resistor ($R_V$), characterized in that a start voltage switch (SS), in parallel with the series resistor ($R_V$) is supplied by the feed voltage ($U_{Sp}$) and in that the start voltage switch (SS) interrupts the start voltage circuit with the series resistor ($R_V$) after a time interval in which the rated voltage of the control electronics is built up by the auxiliary-voltage supply (HH) when the power supply unit (SV) is started up without disturbance.

2. Method according to Claim 1, characterized in that a start capacitor ($C_{St}$) is connected via a start resistor ($R_{St}$) to the feed voltage ($U_{Sp}$) and is charged up to a switching voltage, in that the capacitance of the start capacitor ($C_{St}$) is selected to be of such a magnitude that the rated voltage is built up by the auxiliary-voltage supply (H) during the charging time of the start capacitor ($C_{St}$), and in that the connection from the series resistor ($R_V$) to the control electronics is interrupted by the start voltage switch (SS) after the start capacitor ($C_{St}$) has been charged.

3. Method according to Claim 1 or 2, characterized to the feed voltage ($U_{Sp}$) by the start voltage switch (SS) via the series resistor ($R_V$) and is charged up to the start voltage, which is higher than the rated voltage needed for operating the control electronics, in that after this start voltage has been reached, the auxiliary storage capacitor ($C_H$) is connected to the control electronics by means of an auxiliary-voltage switch (HS) and the capacitance of the auxiliary storage capacitor ($C_H$) is selected to be of such a magnitude that, in the case of disturbance-free operation, the auxiliary-voltage supply (H) builds up to the rated voltage more quickly than the voltage of the auxiliary storage capacitor ($C_H$) drops below the minimum voltage needed for operating the control electronics.

4. Device for carrying out the method according to Claim 1, characterized in that the feed voltage ($U_{Sp}$) is applied to the control electronics, the start voltage switch (SS) and the series resistor ($R_V$), which is connected via the start voltage switch (SS) to the control electronics and in that auxiliary-voltage supply (H) is connected from the power supply unit (SV) via a blocking diode (D) in the forward direction in parallel with the start voltage circuit to the control electronics.

5. Device according to Claim 4 for carrying out the method according to Claim 2, characterized in that the start capacitor ($C_{St}$) and a start voltage comparator (SK), which is connected in parallel with the start capacitor, are connected in series with the start resistor ($R_{St}$) and in that these components are connected in parallel with the start voltage switch (SS).

6. Device according to Claim 4 or 5 for carrying out the method according to Claim 3, characterized in that the auxiliary storage capacitor ($C_H$), an auxiliary-voltage comparator (HK) and the auxiliary-voltage switch (HS) are connected in parallel with one another and in parallel with the auxiliary-voltage supply (H) and in that an output of the auxiliary-voltage comparator (HK) is additionally connected to an input of the auxiliary-voltage switch (HS).

**Revendications**

1. Procédé pour la mise en oeuvre d'une unité d'alimentation en courant (SV) commandée de façon cadencée par une unité électronique de régulation et de commande, avec une unité auxiliaire d'alimentation en tension (H), qui est alimentée par l'unité d'alimentation en courant (SV) et alimente l'unité électronique de régulation et de commande au moyen d'une tension de démarrage dérivée d'une tension d'alimentation ($U_{Sp}$) par l'intermédiaire d'une résistance additionnelle ($R_V$), caractérisé par le fait qu'un interrupteur (SS) de la tension de démarrage est alimenté, en parallèle avec la résistance additionnelle ($R_V$), par la tension d'alimentation ($U_{Sp}$) et que l'interrupteur (SS) de la tension de démarrage interrompt le circuit délivrant la tension de démarrage et comportant la résistance additionnelle ($R_V$), au bout d'un intervalle de temps pendant lequel, dans le cas d'une mise en service sans perturbation de l'unité d'alimentation en courant (SV), la tension nominale de l'unité électronique de régulation et de commande est établie par l'unité d'alimentation en tension auxiliaire (H).

2. Procédé suivant la revendication 1, caractérisé par le fait qu'un condensateur de démarrage ($C_{St}$) est raccordé par l'intermédiaire d'une résistance de démarrage ($R_{St}$) à la tension d'alimentation ($U_{Sp}$) et est chargé à une tension de commutation, que la capacité du condensateur de démarrage ($C_{St}$) est choisie suffisamment élevée pour que, pendant la durée de la charge du condensateur de démarrage ($C_{St}$), la tension nominale soit établie par l'unité d'alimentation en tension auxiliaire (H) et qu'après le chargement du condensateur de démarrage ($C_{St}$), la liaison entre la résistance additionnelle ($R_V$) et l'unité électronique de régulation et de commande est interrompue par l'interrupteur (SS) de la tension de démarrage.

3. Procédé suivant la revendication 1 ou 2, caractérisé par le fait qu'un condensateur d'accumulation auxiliaire ($C_H$) est raccordé à la tension d'alimentation ($U_{Sp}$) par l'interrupteur (SS) de la tension de démarrage, par l'intermédiaire de la résistance additionnelle ($R_V$) et est chargé à la tension de démarrage qui est supérieure à la tension nominale nécessaire pour le fonctionnement de l'unité électronique de régulation et de commande, qu'une fois cette tension de démarrage atteinte, le condensateur d'accumulation auxiliaire ($C_H$) est raccordé par un interrupteur (HS) de la tension auxiliaire à l'unité électronique de régulation et de commande et qu'on choisit la capacité du condensateur d'accumulation auxiliaire ($C_H$) suffisamment élevée pour que l'unité d'alimentation en tension auxiliaire (H) établisse la tension nominale, lors d'un fonctionnement non perturbé, plus rapidement que ne s'effectue la retombée de la tension du condensateur d'accumulation auxiliaire ($C_H$) au-dessous de la tension minimale nécessaire pour le fonctionnement de l'unité électronique de régulation et de commande.

4. Dispositif pour la mise en oeuvre du procédé suivant la revendication 1, caractérisé par le fait que la tension d'alimentation ($U_{Sp}$) est appliquée à l'unité électronique de régulation et de commande, à l'interrupteur (SS) de la tension de démarrage et à la résistance additionnelle ($R_V$), qui est raccordée par l'intermédiaire de l'interrupteur (SS) de la tension de démarrage à l'unité électronique de régulation et de commande, et que l'unité auxiliaire d'alimentation en tension auxiliaire (H) est raccordée à l'unité électronique de régulation et de commande, dans le sens passant, par l'unité d'alimentation en courant (SV) et par l'intermédiaire d'une diode de blocage (D), parallèlement au circuit délivrant la tension de démarrage.

5. Dispositif suivant la revendication 4 pour la mise en oeuvre du procédé suivant la revendication 2, caractérisé par le fait que le condensateur de démarrage ($C_{St}$) et un comparateur de la tension de démarrage (SK), branché en parallèle avec ce condensateur, sont raccordés en série avec la résistance de démarrage ($R_{St}$), et que ces composants sont branchés en parallèle avec l'interrupteur (SS) de la tension de démarrage.

6. Dispositif suivant la revendication 4 ou 5 pour la mise en oeuvre du procédé suivant la revendication 3, caractérisé par le fait que le condensateur d'accumulation auxiliaire ($C_H$), un comparateur (HK) de la tension auxiliaire et l'interrupteur (HS) de la tension auxiliaire sont branchés en parallèle entre eux et avec l'unité d'alimentation en tension auxiliaire (H), et qu'une sortie du comparateur (HK) de la tension auxiliaire est raccordée en outre à une entrée de l'interrupteur (HS) de la tension auxiliaire.

FIG 1

FIG 2

FIG 3